(19) Europäisches Patentamt / European Patent Office / Office européen des brevets

(11) **EP 2 869 908 B1**

(12) **FASCICULE DE BREVET EUROPEEN**

(45) Date de publication et mention de la délivrance du brevet:
**12.09.2018 Bulletin 2018/37**

(21) Numéro de dépôt: **12746111.9**

(22) Date de dépôt: **09.07.2012**

(51) Int Cl.:
**B01D 53/047** *(2006.01)* **C08F 6/00** *(2006.01)*
**C08J 11/02** *(2006.01)* **C08L 23/10** *(2006.01)*

(86) Numéro de dépôt international:
**PCT/FR2012/051623**

(87) Numéro de publication internationale:
**WO 2014/009611 (16.01.2014 Gazette 2014/03)**

(54) **PROCÉDÉ CYCLIQUE DE PRODUCTION D'AZOTE DE HAUTE PURETÉ ET ÉVENTUELLEMENT D'HYDROCARBURE DE HAUTE PURETÉ À PARTIR D'UNE CHARGE CONTENANT DE L'AZOTE ET UN HYDROCARBURE.**

ZYKLISCHER PROZESS ZUR ERZEUGUNG VON HOCHREINEM STICKSTOFF UND EVENTUELL VON HOCHREINEN KOHLENWASSERSTOFFEN AUS EINEM FEEDGAS, DAS STICKSTOFF UND KOHLENWASSERSTOFFE ENTHÄLT

CYCLIC PROCESS FOR PRODUCING HIGH PURITY NITROGEN AND OPTIONALLY HIGH PURITY HYDROCARBONS FROM A FEED CONTAINING NITROGEN AND HYDROCARBONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**13.05.2015 Bulletin 2015/20**

(73) Titulaires:
- **Total Petrochemicals France**
  **92400 Courbevoie (FR)**
- **Universidade do Porto, (Uporto) Faculdade de Engenharia**
  **4200-465 Porto (PT)**
- **Korea Research Institute of Chemical Technology**
  **Daejeon 305-343 (KR)**

(72) Inventeurs:
- **LUCK, Francis**
  **F-93160 Noisy Le Grand (FR)**
- **LEROI, Catherine**
  **F-64000 PAU (FR)**
- **FERNANDEZ, Alvaro**
  **B-1400 Nivelles (BE)**
- **PEIXOTO RIBEIRO, Ana Mafalda Almeida**
  **P-4450-676 Leca Da Palmeira (PT)**
- **GODINHO DE FARIA DOS SANTOS, Joao Carlos**
  **P-4450-296 Matosinhos (PT)**

- **RODRIGUES, Alirio Egidio**
  **P-4100-115 Porto (PT)**
- **CHANG, Jong-San**
  **Daejeon 301-150 (KR)**
- **LEE, U-Hwang**
  **Kwangmyeong-si**
  **Gyeonggi-do 423-030 (KR)**
- **HWANG, Young Kyu**
  **Daejeon 305-720 (KR)**
- **BONNE, Jean-Patrick**
  **F-64230 Denguin (FR)**

(74) Mandataire: **Cabinet Plasseraud**
**66, rue de la Chaussée d'Antin**
**75440 Paris Cedex 09 (FR)**

(56) Documents cités:
**EP-A1- 1 302 478     WO-A1-2009/007436**

- **HERVÉ LECLERC ET AL: "Infrared study of the influence of reducible iron(iii) metal sites on the adsorption of CO, CO2, propane, propene and propyne in the mesoporous metal-organic framework MIL-100", PHYSICAL CHEMISTRY CHEMICAL PHYSICS, vol. 13, no. 24, 1 janvier 2011 (2011-01-01), pages 11748-11756, XP055057974, ISSN: 1463-9076, DOI: 10.1039/c1cp20502a**

**Description**

La présente invention concerne un procédé cyclique de production d'une fraction d'azote de pureté supérieure ou égale à 95% molaire (2) d'une part et d'une fraction enrichie en hydrocarbure (3) d'autre part à partir d'une charge (1) contenant de l'azote et un hydrocarbure. Une installation pour la mise en oeuvre de ce procédé est également décrite.

Il existe beaucoup de procédés dans l'industrie énergétique, dans le raffinage ou la pétrochimie, au cours desquels se forment un mélange d'azote et d'hydrocarbure(s). Par exemple, lors de la production de polypropylène à partir de propylène, on utilise de l'azote pour purifier le polymère et notamment pour entraîner le propylène n'ayant pas réagi lors de la polymérisation. En général, le propylène contient également une faible fraction de propane.

Souvent, le mélange d'azote et d'hydrocarbures ne peut pas être recyclé dans le procédé. Le mélange est donc brûlé et rejeté dans l'air.

Il serait donc souhaitable de pouvoir valoriser ce mélange d'azote et d'hydrocarbure(s). En particulier, il serait souhaitable de pouvoir séparer l'azote des hydrocarbure(s) et de récupérer de l'azote de haute pureté à l'aide d'un système le moins énergivore possible et avec le plus haut rendement possible. Il serait également souhaitable de pouvoir récupérer les hydrocarbures avec une haute pureté et un haut rendement.

On peut par exemple utiliser des techniques de condensation ou membranaires ou une combinaison des deux pour récupérer les hydrocarbures. Cependant, la méthode est coûteuse et les rendements sont en général faibles.

Les techniques de séparation comprennent également l'absorption par un solvant chimique (par exemple les amines) ou la distillation. Cependant, ces procédés nécessitent des installations lourdes avec des dépenses d'exploitation (OPEX) et des dépenses d'investissement de capital (CAPEX) élevées.

Une autre solution consiste à utiliser des adsorbants solides soumis à des cycles d'adsorption et de désorption. L'étape de désorption peut être réalisée soit en diminuant la pression par adsorption modulée en pression (en anglais « Pressure Swing Adsorption » [PSA]) ou bien en augmentant la température par adsorption modulée en température (en anglais « Température Swing Adsorption » [TSA]).

EP 1 302 478 décrit un procédé PSA de séparation d'un flux gazeux comprenant de l'éthylène et de l'azote, dans lequel l'éthylène est adsorbé sur un lit d'adsorbant et qui permet de récupérer d'une part un flux d'éthylène purifié et un flux riche en azote.

WO 2009/007436 décrit un procédé de séparation d'un flux gazeux comprenant un mélange d'azote et de méthane, dans lequel le mélange est mis en contact avec un adsorbant de type MOF (Metal-organic framework).

Les adsorbants solides classiques comprennent le charbon actif, les alumines activées, les gels de silice, ou bien d'autres oxydes métalliques poreux. La capacité d'adsorption de ces adsorbants n'est cependant pas suffisante pour concurrencer les procédés industriels décrits précédemment.

L'invention a pour objet un procédé cyclique de production d'azote de pureté supérieure à 95% molaire (2) d'une part et d'une fraction enrichie en hydrocarbure (3) d'autre part à partir d'une charge (1) contenant de l'azote et un hydrocarbure, ledit procédé utilisant une classe particulière de solides hybrides poreux (en anglais : « Metal-Organic Frameworks » ou encore « MOF ») comme adsorbant dans un procédé d'adsorption modulée en pression (PSA).

Le procédé objet de l'invention permet, à partir d'une installation simple et peu coûteuse, de séparer un mélange azote/hydrocarbures pour récupérer soit de l'azote de haute pureté, soit à la fois de l'azote de haute pureté et des hydrocarbures de haute pureté, et ce avec d'excellents taux de récupération.

L'invention a plus précisément pour objet un procédé cyclique de production d'une fraction d'azote de pureté $\geq$ 95 % molaire (2) d'une part et d'une fraction enrichie en hydrocarbure (3) d'autre part à partir d'une charge (1) contenant de l'azote et un hydrocarbure, chaque cycle comprenant les étapes suivantes :

i) mise en contact de ladite charge (1) avec un lit d'adsorbant pourvu d'une extrémité d'alimentation et d'une extrémité de production et contenant un adsorbant solide choisi parmi les solides hybrides poreux, ladite mise en contact étant réalisée sous une pression $P_1 \geq 0,1$ MPa et une température $T_1 \geq 0$ °C;

ii) récupération à l'extrémité de production du lit d'adsorbant d'une première fraction d'azote de pureté $\geq$ 95 % molaire (2);

iii) dépressurisation à co-courant du lit d'adsorbant jusqu'à une pression $P_2 < P_1$, où $P_2 \geq 0,1$ MPa, de manière à récupérer à l'extrémité de production du lit d'adsorbant une deuxième fraction d'azote de pureté $\geq$ 95 % molaire (2);

iv) dépressurisation à contre-courant du lit d'adsorbant jusqu'à une pression $P_3 < P_2$, où $0,05$ MPa $\leq P_3 \leq 0,006$ MPa, de manière à désorber les hydrocarbures du lit et à récupérer à l'extrémité d'alimentation du lit d'adsorbant une première fraction enrichie en hydrocarbure (3);

v) purge à contre-courant du lit d'adsorbant à l'aide portion de l'azote de pureté $\geq$ 95 % molaire (2) sous la pression $P_3$ de manière à récupérer à l'extrémité d'alimentation du lit d'adsorbant une deuxième fraction enrichie en hydrocarbure (3);

vi) repressurisation à contre-courant du lit d'adsorbant à l'aide de l'azote de pureté $\geq$ 95 % molaire (2) ou avec la charge (1) jusqu'à la pression $P_1$ ;

dans lequel ledit adsorbant a une capacité dynamique vis-à-vis de l'hydrocarbure d'au moins 3 mmole/g entre 0,25 MPa et 0,05 MPa à 50°C et une capacité dynamique vis-à-vis de l'azote inférieure ou égale à 0,50 mmole/g entre 0,25 MPa et 0,05 MPa à 50 °C.

La capacité dynamique d'un adsorbant (mmole/g) est définie comme étant la différence entre la quantité adsorbée (mmole) par gramme d'adsorbant et la quantité restant adsorbée (mmole) par gramme d'adsorbant après l'étape de désorption. La capacité dynamique est une fonction des isothermes d'adsorption des différents constituants de la charge. En négligeant les effets cinétiques, la capacité dynamique d'un constituant donné (en l'occurrence l'azote ou l'hydrocarbure) peut être estimée par le calcul de l'écart entre la quantité adsorbée à la pression d'adsorption et la quantité désorbée à la pression de désorption pour ce constituant.

Le procédé objet de la présente invention utilise comme adsorbant un solide appartenant à la famille des solides hybrides poreux que l'on nomme également en langue anglaise « Métal Organic Framework » (MOF). Les solides hybrides poreux sont bien connus de la personne de l'art. Ils sont constitués de sous-unités inorganiques (métaux de transition, lanthanides ...) connectées entre elles par des ligands organiques (carboxylates, phosphonates, imidazolates ...), définissant ainsi des réseaux hybrides cristallisés poreux.

Les inventeurs ont constaté de manière inattendue que des solides hybrides poreux présentant une capacité dynamique telle que définie ci-dessus pouvaient être utilisés dans un procédé d'adsorption modulée en pression (PSA) pour séparer de manière très performante des mélanges gazeux d'hydrocarbures et d'azote.

De préférence, le solide hybride poreux présente une capacité dynamique vis-à-vis de l'hydrocarbure d'au moins 3,5 mmole/g, de préférence d'au moins 3,8 mmole/g, entre 0,25 MPa et 0,05 MPa, et une capacité dynamique vis-à-vis de l'azote inférieure ou égale à 0,50 mmole/g, de préférence inférieure ou égale à 0,20 mmole/g entre 0,25 MPa et 0,05 MPa.

Le solide hydride poreux selon l'invention pourra comprendre l'un des ions métalliques suivants : Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb, ou Bi, de préférence Fe, Cu, Zr ou Ti, plus préférentiellement Fe.

Le solide hydride poreux selon l'invention pourra comprendre comme composé organique bidentate l'un des groupements fonctionnels suivant : $-COOH$, $-CS_2H$, $-NO_2$,$-B(OH)_2$, $-SO_3H$, $-Si(OH)_3$, $-Ge(OH)_3$, $-Sn(OH)_3$, $-Si(SH)_4$, $-Ge(SH)_4$, $-Sn(SH)_3$, $-PO_3H$, $-AsO_3H$, $-AsO_4H$, $-P(SH)_3$, $-As(SH)_3$, $-CH(RSH)_2$, $-C(RSH)_3$, $-CH(RNH_2)_2$, $-C(RNH_2)_3$,$-CH(ROH)_2$, $-C(ROH)_3$, $-CH(RCN)_2$ and $-C(RCN)_3$, où R est de préférence un groupe alkylene avec 1 à 5 atomes de carbone ou bien un groupe aryle.

De préférence, le solide hybride poreux selon l'invention est choisi parmi le MIL 100 (Fe), le MIL 125(Ti) ou le MIL-125(Ti)_NH2, ou bien parmi le CuBTC ou l' UiO66.

La taille des pores du solide hybride poreux peut être comprise entre 5 et 30 Å. De préférence, le solide hybride poreux présente une surface spécifique mesurée selon la méthode BET comprise entre 1000 $m^2$/g et 3000 $m^2$/g, plus préférentiellement entre 1500 $m^2$/g et 2500 $m^2$/g.

Le plus souvent, le solide hybride poreux nécessitera d'être activé avant de commencer l'étape d'adsorption, notamment par déshydratation thermique.

Selon la présente invention, l'extrémité d'alimentation du lit d'adsorbant est définie comme étant celle par laquelle on introduit la charge (1) contenant l'azote et un hydrocarbure au moment de l'étape d'adsorption. L'extrémité de production du lit d'adsorbant est définie comme étant celle par laquelle on soutire l'azote de haute pureté au cours de l'étape d'adsorption.

La charge (1) peut provenir de tout procédé susceptible de générer un mélange gazeux d'azote et d'hydrocarbure(s), comme par exemple une installation de production de polypropylène. Le procédé de l'invention permet de séparer des mélanges gazeux contenant au moins 30 % molaire d'azote et au plus 70 % molaire d'hydrocarbure, de préférence au moins 70 % molaire d'azote et au plus 30 % molaire d'hydrocarbure. La charge (1) peut comprendre plusieurs hydrocarbures : un présent en quantité majoritaire (par exemple le propylène), les autres étant présents en quantité beaucoup plus faible (par exemple le propane, l'éthane, le méthane, etc...).

Selon le procédé de l'invention, l'hydrocarbure est le propylène.

Les étapes i) à vi) du procédé tel que décrit ci-dessus peuvent être mise en oeuvre par un procédé PSA (en anglais « Pressure Swing Adsorption »), en particulier en mode VPSA (en anglais « Vacuum Pressure Swing Adsorption »). Le principe de base du PSA est de jouer sur la capacité de l'adsorbant d'adsorber plus d'impuretés à haute pression qu'à basse pression. Ainsi, en enchaînant des phases d'adsorption et désorption, d'une pression haute à une pression basse du cycle, on peut effectuer une séparation sélective des molécules de gaz. De plus, avec des unités d'adsorption fonctionnant en séquence, on peut purifier en continu le gaz à traiter. L'installation pourra ainsi comprendre plusieurs lits d'adsorbants, par exemple entre 2 et 4 lits d'adsorbant, de préférence 3 lits d'adsorbant.

Chaque cycle du procédé de l'invention comprend les étapes successives suivantes :

Etape (i) : la charge (1) est introduite via l'extrémité d'alimentation du lit d'adsorbant sous une pression $P_1 \geq 0,1$ MPa et une température $T_1 \geq 0$ °C. La charge (1) entre ainsi en contact avec le solide hydride poreux. De préférence, $P_1$ est comprise entre 0,1 MPa et 1 MPa, plus préférentiellement comprise entre 0,2 MPa et 0,5 MPa, et encore plus préférentiellement égale à environ 0,25 MPa. De préférence, $T_1$ est comprise entre 0 °C et 100 °C, plus préférentiellement égale à environ 50 °C. Le lit d'adsorbant peut être pressurisé à l'aide de la charge (1), ou bien avec de l'azote.

Etape (ii) : en passant à travers le lit d'adsorbant, l'hydrocarbure contenu dans la charge (1) est adsorbé sur le solide hybride poreux. L'hydrocarbure présentant une affinité pour le solide hybride poreux beaucoup plus importante que celle de l'azote, la mise en contact de la charge (1) avec le solide hybride poreux conduit à un enrichissement de la charge (1) en azote. On récupère alors un azote de pureté supérieure ou égale à 95 % molaire à l'extrémité de production du lit d'adsorbant.

La sélectivité hydrocarbure/azote dans les conditions de l'étape i) est d'au moins 20 à 50°C et 0,25 MPa. Par exemple, la sélectivité propylène/azote à 0,1 MPa et 50°C pour le MIL-100 (Fe) est d'environ 40. La sélectivité est définie par la formule suivante :

$$\text{Sélectivité} = xHC*yN2/(xN2*yHC)$$

dans laquelle :

$xHC$ = Nombre de moles d'hydrocarbure adsorbées/(Nombre de moles d'hydrocarbure adsorbées + Nombre de moles d'azote adsorbées),

$xN2$ = Nombre de moles d'azote adsorbées/(Nombre de mole d'hydrocarbure adsorbées + Nombre de moles d'azote adsorbées),

$yHC$ = Nombre de moles d'hydrocarbure dans la charge/(Nombre de moles d'hydrocarbure dans la charge + Nombre de moles d'azote dans la charge),

$yN2$ = Nombre de moles d'azote dans la charge/(Nombre de moles d'hydrocarbure dans la charge + Nombre de moles d'azote dans la charge).

Etape (iii) : le lit d'adsorbant est dépressurisé à co-courant jusqu'à une pression $P_2 < P_1$, où $P_2 \geq 0,1$ MPa, de manière à récupérer à l'extrémité de production du lit d'adsorbant une deuxième fraction d'azote de pureté $\geq 95$ % molaire (2). De préférence, $P_2$ est comprise entre 0,2 MPa et 0,1 MPa, plus préférentiellement entre 0,15 et 0,1 MPa, encore plus préférentiellement égale à environ 0,1 MPa.

Etape (iv) : le lit d'adsorbant est ensuite dépressurisé à contre-courant jusqu'à une pression $P_3 < P_2$, où 0,05 MPa $\leq P_3 \leq 0,006$ MPa, de manière à désorber les hydrocarbures du lit et à récupérer à l'extrémité d'alimentation du lit d'adsorbant une première fraction enrichie en hydrocarbure (3). Cette étape est communément appelée « Blowdown » en anglais. De préférence, $P_3$ est comprise entre 0,05 MPa et 0,01 MPa, plus préférentiellement entre 0,05 MPa et 0,025 MPa, encore plus préférentiellement égale à environ à 0,04 MPa. Le lit d'adsorbant peut être dépressurisé à l'aide d'un système à vide.

En désorbant l'hydrocarbure, on régénère ainsi le solide hybride poreux.

Etape (v) : on purge à contre-courant le lit d'adsorbant à l'aide d'une portion de l'azote de pureté $\geq 95$ % molaire (2) sous la pression $P_3$ de manière à récupérer à l'extrémité d'alimentation du lit d'adsorbant une deuxième fraction enrichie en hydrocarbure (3).

Le procédé selon l'invention est caractérisé en ce qu'on effectue une étape supplémentaire consistant à recycler une partie de la première fraction enrichie en hydrocarbure (2) dans le lit d'adsorbant par l'extrémité d'alimentation avant d'effectuer l'étape iv) de dépressurisation, de manière à saturer le lit en hydrocarbure et à récupérer à l'issue de l'étape iv) une fraction enrichie en hydrocarbure (2) avec une pureté $\geq 90$ % molaire. Cette étape est communément appelée Rinçage ou bien « Rinse » en anglais.

Dans ce cas, l'étape de dépressurisation iv) est de préférence réalisée sous une pression $P_3$ comprise entre 0,05 MPa et 0,006 MPa, plus préférentiellement entre 0,03 MPa et 0,006 MPa, encore plus préférentiellement entre 0,02 MPa et 0,006 MPa, encore plus préférentiellement à environ 0,01 MPa.

Etape (vi) : on repressurise à contre-courant le lit d'adsorbant à l'aide de l'azote de pureté ≥ 95 % molaire (2) ou avec la charge (1) jusqu'à la pression P$_1$.

Le procédé de l'invention permet de récupérer un azote de pureté ≥ 95 % molaire avec un taux de récupération supérieur ou égal à 80 %, de préférence supérieur ou égal à 95 %.

Si l'on effectue l'étape supplémentaire consistant à recycler une partie de la fraction enrichie en hydrocarbure (2) dans le lit d'adsorbant par l'extrémité d'alimentation avant d'effectuer l'étape iv) de dépressurisation, le procédé de l'invention permet en outre de récupérer un hydrocarbure avec une pureté ≥ 90 % molaire et un taux de récupération supérieur ou égal à 80 %, de préférence supérieur au égal à 90 %.

Dans un mode de réalisation préféré, on utilise le MIL-100 (Fe) pour séparer l'azote du propylène et récupérer un azote de haute pureté en réalisant les étapes décrites ci-dessus. L'étape d'adsorption i) est réalisée de préférence entre 0,2 MPa et 0,5 MPa, notamment à 0,25 MPa et à 50°C. L'étape de co-depressurisation (iii) est réalisée de préférence entre 0,1 et 0,15 MPa, notamment à 0,1 MPa. Les étapes de blowdown iv) et de purge (v) sont réalisées de préférence entre 0,05 et 0,025 MPa, notamment à 0,04 MPa. L'étape de repressurisation (vi) est de préférence réalisée entre 0,2 et 0,5 MPa, notamment à 0,25 MPa.

Selon le procédé de l'invention, une partie de la première fraction enrichie en propylène (2) est recyclée dans le lit d'adsorbant par l'extrémité d'alimentation avant d'effectuer l'étape iv) de dépressurisation pour récupérer en outre du propylène de haute pureté. Dans ce cas, l'étape d'adsorption i) est réalisée de préférence entre 0,2 MPa et 0,5 MPa, notamment à 0,25 MPa et à 50°C. L'étape de co-dépressurisation (iii) est réalisée de préférence entre 0,1 et 0,15 MPa, notamment à 0,1 MPa. L'étape de rinçage est réalisée de préférence entre 0.1 et 0.15 MPa, notamment à 0,1MPa. Les étapes de blowdown iv) et de purge (v) sont réalisées de préférence entre 0,02 et 0,006 MPa, notamment à 0,01 MPa. L'étape de repressurization (vi) est de préférence réalisée entre 0,2 et 0,5 MPa, notamment à 0,25 MPa.

Une installation pour la mise en oeuvre du procédé tel que décrit ci-dessus dans le cas particulier d'une charge (1) comprenant du propylène et de l'azote est également décrite.

Cette installation comprend :

- un réacteur de polymérisation avec une entrée permettant d'introduire du propylène en tant que réactif, ledit propylène comprenant une fraction de propane, ainsi que les autres ingrédients nécessaire à la polymérisation;
- un séparateur gaz/solide disposé en sortie du réacteur de polymérisation recevant le polypropylène solide issu de la réaction de polymérisation ainsi qu'un mélange propylène/propane n'ayant pas réagit, ledit séparateur gaz/solide comprenant en outre :

  - une entrée permettant d'introduire de l'azote destiné à dégazer le polypropylène solide,
  - une sortie (A) pour le mélange gazeux azote/propylène/propane; et
  - une sortie (B) pour récupérer le polypropylène solide ;

- au moins une colonne d'adsorbant choisi parmi les solides hybrides poreux, lesdites colonnes permettant de recevoir le mélange gazeux azote/propylène/propane de manière à produire d'une part un azote de pureté ≥ 95 % molaire et d'autre part un mélange enrichi en propylène et propane.

En outre, l'installation pourra comprendre :

- une ligne permettant de recycler l'azote azote de pureté ≥ 95 % molaire dans le séparateur.
- une ligne permettant de recycler le mélange enrichi en propylène et propane dans la colonne d'adsorbant de manière à saturer le lit en hydrocarbure et à récupérer une fraction en propylène et propane de pureté ≥ 90 % molaire.
- une ligne permettant de recycler ladite fraction en propylène et propane de pureté ≥ 95 % molaire dans le réacteur de polymérisation ou bien une colonne de distillation pour séparer le propylène du propane à partir de ladite fraction.

La Figure 1 représente les isothermes d'adsorption de l'azote sur le MIL-100(Fe) à différentes températures (50, 100 et 150°C), jusqu'à 5 bars abs.

La Figure 2 représente la comparaison entre les isothermes d'adsorption de l'azote et du propylène à 50 °C sur le MIL-100(Fe).

La figure 3 représente schématiquement les étapes du procédé cyclique A) pas selon l'invention.

La figure 4 représente schématiquement le procédé cyclique A) pour un fonctionnement en continu avec 4 colonnes.

La figure 5 représente schématiquement les étapes du procédé B) selon l'invention.

La figure 6 représente schématiquement le procédé cyclique B) pour un fonctionnement en continu avec 3 colonnes.

La figure 7 représente la capacité d'adsorption du MIL-100 (Fe) (« C3H6 (mol/kg) ») en fonction de la pression (Pressure (bar abs.) à 50 °C ou à 70°C, soit sous forme de cylindres (lot 1), soit sous forme de billes (lot 2), dans les conditions de l'exemple 1 (simulation) ou bien dans les conditions de l'exemple 2 (pilote).

La figure 8 représente la comparaison entre les isothermes d'adsorption de l'azote et du propylène à 70 °C sur le MIL-125_NH2.

La figure 9 représente la comparaison entre les isothermes d'adsorption de l'azote et du propylène à 70 °C sur le UiO-66(Zr).

Les exemples qui suivent précisent l'invention sans en limiter la portée.

Dans les exemples qui suivent, toutes les pressions sont exprimées en bar abs. (bar absolu). 1 bar = 0,1 MPa.

Exemples : séparation de l'azote et du propylène à l'aide du MIL-100(Fe)

Le MIL-100(Fe) est un solide hybride poreux trimesate de fer (III) avec une topologie zéolite MTN synthétisé au Korea Research Institute of Chemical Technology (KRICT) (Yoon et al. 2010).

Deux lots ont été testés :

- lot 1 : cylindres tels que décrits ci-dessous,
- lot 2 : billes telles que décrites ci-dessous.

1) Exemple 1 : Mesures d'équilibre et simulation

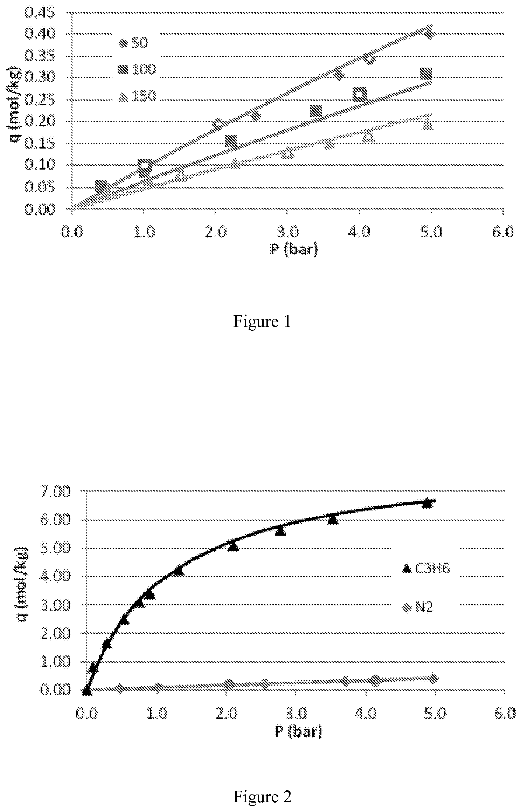

La Figure 1 représente les isothermes d'adsorption de l'azote sur le MIL-100(Fe) tel que caractérisé dans le tableau 2 à différentes températures (50, 100 et 150°C), jusqu'à 5 bars abs. mesuré dans une balance à suspension magnétique Rubotherm.

La Figure 2 représente la comparaison entre les isothermes d'adsorption de l'azote et du propylène à 50 °C sur le MIL-100(Fe) tel que caractérisé dans le tableau 2.

Il ressort de ces isothermes que la sélectivité propylène/azote à 1 bar abs. et 50 °C est d'environ 40.

Deux procédés cycliques PSA ont été simulés :

- A) procédé de production d'azote de haute pureté à partir d'un mélange azote/propylène,
- B) procédé de production d'azote de haute pureté d'une part et de propylène de haute pureté d'autre part à partir d'un mélange azote/propylène.

Le mélange azote/propylène contient 70% molaire d'azote et 30% molaire de propylène. Il est introduit dans le lit d'adsorbant dans les conditions suivantes : 70°C, 1 bar abs. et 4 SLPM, 10.7 mol/h. SLPM = Standard liter per mn (Standard: 70 F & 14.696 psiA (21 °C & 1 Atm)).

Le procédé A) comprend les 5 étapes suivantes :

- Le mélange azote/propylène est introduit à l'extrémité d'alimentation du lit d'adsorbant,
- adsorption sous une pression de 2,5 bars abs.,
- l'azote de haute pureté est récupéré à l'extrémité de production du lit d'adsorbant,
- dépressurisation à co-courant sous une pression de 1 bar abs. afin d'augmenter le taux de récupération de l'azote,
- dépressurisation à contre-courant (« Blowdown ») sous une pression de 0,4 bar abs. de manière à récupérer une première fraction enrichie en propylène, puis
- purge sous une pression de 0,4 bar abs. à l'aide d'une portion de l'azote de haute pureté afin de régénérer le lit d'adsorbant et récupérer une deuxième fraction enrichie en propylène,
- repressurisation du lit d'adsorbant à contre-courant à l'aide d'une fraction de l'azote de haute pureté.

Le procédé B), selon l'invention, comprend les mêmes étapes que le procédé A), avec en outre une étape de rinçage qui consiste à recycler une partie de la première fraction enrichie en propylène obtenue à l'issue de l'étape de dépressurisation à contre-courant dans le lit d'adsorbant de manière à saturer celui-ci en propylène et à récupérer ainsi une fraction en propylène de haute pureté. La pression dans l'étape de dépressurisation à contre-courant et dans l'étape de rinçage est 0,1 bar abs.

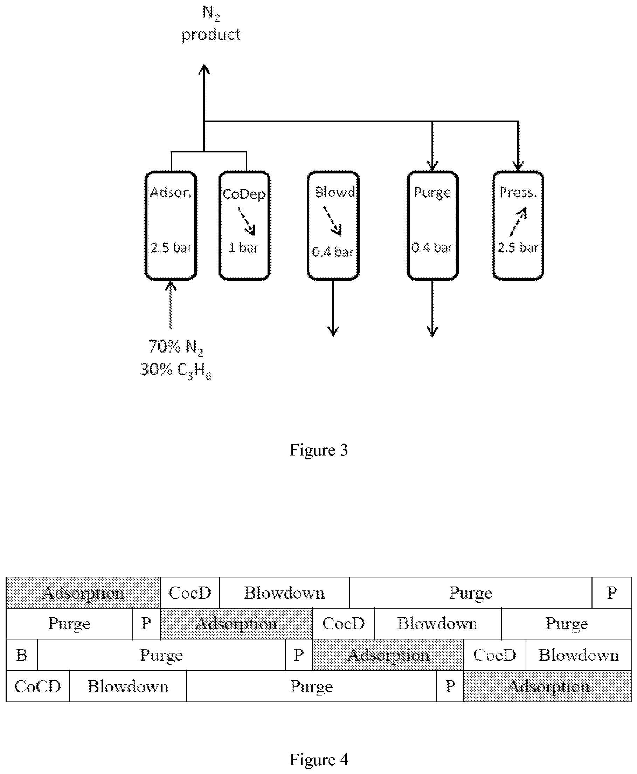

La figure 3 représente schématiquement les étapes du procédé A).

La figure 4 représente schématiquement le procédé cyclique A) pour un fonctionnement en continu avec 4 colonnes.

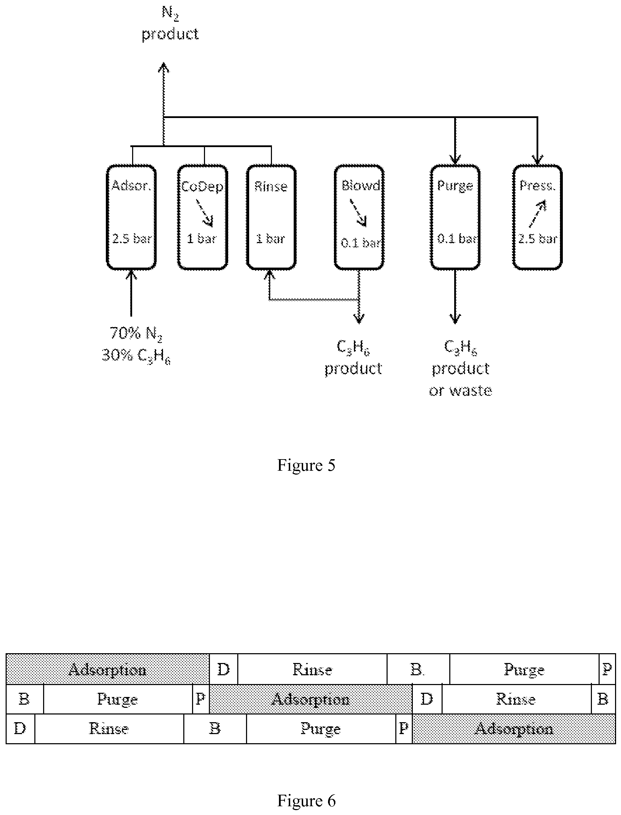

La figure 5 représente schématiquement les étapes du procédé B).

La figure 6 représente schématiquement le procédé cyclique B) pour un fonctionnement en continu avec 3 colonnes.

La signification des expressions utilisées sur les figures 3, 4, 5 et 6 est indiquée dans le tableau 1 suivant :

Tableau 1

| « Adsor. » | Etape d'adsorption |
|---|---|
| « CoDep » ou « CocD » ou « D » | Etape de dépressurisation à co-courant |
| « Rinse » | Etape de recyclage (Rinçage) |
| « Blowdown » ou « Blowd » ou « B » | Etape de dépressurisation à contre-courant (« Blowdown ») |
| « Purge » | Etape de purge à contre-courant |
| « Press. » ou « P » | Etape de repressurisation à contre-courant |
| « N2 product » | Azote de haute pureté récupéré |
| « C3H6 product » | Propylène de haute pureté récupéré |
| « C3H6 waste » | Fraction en propylène non récupérée |

Le modèle mathématique pour effectuer la simulation est celui décrit dans Da Silva et al. 1999, Da Silva et Rodriges 2001, et Ribeiro et al. 2008.

Les valeurs des paramètres de transport requis par le modèle ont été calculées en employant les corrélations habituellement utilisées. Les coefficients de dispersion axiaux de la masse et de la chaleur, ainsi que les coefficients de transfert de masse et de chaleur par convection ont été estimés en utilisant les corrélations Wakao et Funazkri (Wakao et Funazkri 1978, Yang 1987, Da Silva 1999). Le coefficient de transfert de chaleur par convection entre le gaz et la paroi de la colonne a été calculé avec la corrélation de Wash et Froment (Wash et Froment 1972). La diffusivité macropore a été calculée avec l'équation de Bosanquet et les diffusivités ont été déterminées avec l'équation de Chapman-Enskog (Bird et al. 2002). Les propriétés générales des gaz, comme la densité, la viscosité et la chaleur spécifique molaire ont été obtenues selon Bird et al. 2002. On a supposé que la chaleur spécifique molaire du gaz adsorbé était égale à celle de la phase gazeuse (Sircar 1985).

Les dimensions du lit d'adsorbant et les propriétés de l'adsorbant sont indiquées dans le tableau 2 suivant :

Tableau 2

| Longueur du lit (m) | 2 |
|---|---|
| Diamètre du lit (m) | 0,026 |
| Porosité du lit | 0,41 |
| Adsorbant | MIL-100(Fe) |
| Forme de l'adsorbant | cylindres |
| Rayon du cylindre (m) | $1,5 \times 10^{-3}$ |
| Longueur du cylindre (m) | $3,85 \times 10^{-3}$ |
| Densité de particule (kg/m3) | 888 |
| Porosité du cylindre | 0,34 |
| Diamètre de crystal | $1,4 \times 10^{-3}$ |

Les valeurs des paramètres de transport dans les conditions d'alimentation sont indiquées dans le tableau 3 suivant :

Tableau 3

| | |
|---|---|
| Coefficient de dispersion axial de la masse (m$^2$/s) | $5,5 \times 10^{-4}$ |
| Coefficient de dispersion axial de la chaleur (W/m/K) | 0,50 |
| Coefficient de transfert de masse du film (m/s) | $2,3 \times 10^{-2}$ |
| Coefficient de transfert de chaleur du film entre le gaz et la particule (W/m$^2$/K) | 85 |
| Coefficient de transfert de chaleur du film entre le gaz et la paroi (W/m$^2$/K) | 60 |
| Coefficient de transfert de chaleur global (W/m$^2$/K) | 40 |
| Diffusivité macropore (m$^2$/s) | C3H6 : $3,04 \times 10^{-6}$<br>N2 : $3,07 \times 10^{-3}$ |
| Diffusivité cristalline (m$^2$/s) | C3H6 : $1,18 \times 10^{-10}$<br>N2 : $1,13 \times 10^{-9}$ |

La consommation d'énergie du procédé a aussi été calculée. On a fait l'hypothèse d'une compression adiabatique et l'équation suivante a été utilisée :

$$ Power \; = \; \frac{1}{\eta} \dot{n} \, R_g \, T_1 \, \frac{\gamma}{\gamma - 1} \left[ \left( \frac{P_2}{P_1} \right)^{\frac{\gamma-1}{\gamma}} - 1 \right] $$

Dans laquelle :
$\eta$ est l'efficacité, $n$ est le flux molaire, $R_g$ est la constante de gaz idéale, $T_1$ est la température d'alimentation, P1 et P2 sont respectivement la pression d'entrée et la pression de sortie et $\gamma$ est le ratio entre la capacité de chaleur du mélange gazeux à une pression constante et la capacité de chaleur du mélange gazeux à un volume constant ($\gamma$ = Cp/Cv) (Mc Cabe et al. 1993 ; McAllister 2009). Pour la compression de la charge d'alimentation de 1 bar abs. à 2,5 bars abs. on a fixé une efficacité de 85%. Dans le cas de pompes à vide (requise pour les étapes de dépressurisation à contre-courant et de purge), on a supposé une efficacité de 60%.

La performance du procédé PSA a été évaluée à partir des paramètres suivants : pureté du produit récupéré, taux de récupération, productivité telle que définie par Rota et Wankat (Rota et Wankat et al.).

1.1. Récupération de l'azote de haute pureté (procédé A):

La pureté de l'azote est définie de la manière suivante :

$$ \frac{n^S_{N_2}\left(Adsorption\right) + n^S_{N_2}\left(Depressurization\right)}{n^S_{Total}\left(Adsorption\right) + n^S_{Total}\left(Depressurization\right)} $$

dans laquelle :
$n^S_{N_2}\left(Adsorption\right)$ représente le nombre de moles d'azote sortant dans la phase gaz pendant l'étape d'adsorption,
$n^S_{N_2}\left(Depressurization\right)$ représente le nombre de moles d'azote sortant dans la phase gaz pendant l'étape de dépressurisation,
$n^S_{Total}\left(Adsorption\right)$ représente le nombre total de moles sortant dans la phase gaz pendant l'étape d'adsorption,
$n^S_{Total}\left(Depressurization\right)$ représente le nombre total de moles sortant dans la phase gaz pendant l'étape de dépressurisation.

Le taux de récupération de l'azote est défini de la manière suivante :

$$\frac{n_{N_2}^S\left(Adsorption\right)+n_{N_2}^S\left(Depressurization\right)-n_{N_2}^E\left(Purge\right)-n_{N_2}^E\left(\mathrm{Pr}\,essurization\right)}{n_{N_2}^E\left(Adsorption\right)}$$

dans laquelle :

$n_{N_2}^S\left(Adsorption\right)$ représente le nombre de moles d'azote sortant dans la phase gaz pendant l'étape d'adsorption,

$n_{N_2}^S\left(Depressurization\right)$ représente le nombre de moles d'azote sortant dans la phase gaz pendant l'étape de dépressurisation,

$n_{N_2}^E\left(Purge\right)$ représente le nombre de moles d'azote entrant dans la colonne pendant l'étape de purge,

$n_{N_2}^E\left(\mathrm{Pr}\,essurization\right)$ représente le nombre de moles d'azote entrant dans la colonne pendant l'étape de repressurization,

$n_{N_2}^E\left(Adsorption\right)$ représente le nombre de moles d'azote entrant avec la charge pendant l'étape d'adsorption.

Les résultats de simulation sont indiqués dans le tableau 4 suivant :

Tableau 4

| Durée des étapes (s) | | | | |
|---|---|---|---|---|
| Adsorption | Dépressurisation à co-courant | Dépressurisation à contre-courant (« Blowdown ») | Purge | Repressurization |
| 300 | 100 | 250 | 500 | 50 |
| P (bar abs.) | P (bar abs.) | P (bar abs.) | T alimentation (°C) | |
| 2,5 | 1,0 | 0,4 | 70 | |
| Débit d'adsorption (SLPM) | | | Débit de purge (SLPM) | |
| 4,0 | | | 0,24 | |
| Azote récupéré | | | Fraction enrichie en propylène | |
| Pureté (%) | Taux de récupération (%) | Productivité ($mol_{N2}/kg_{ads}$/h) | Pureté (%) | |
| 99,9 | 81,5 | 2,74 | 67,3 | |
| Consommation énergétique | | | | |
| 19,7 W (3,2 Wh/$mol_{N2}$) | | | | |

1.2. Récupération de l'azote de haute pureté d'une part et du propylène de haute pureté d'autre part (procédé B):

La pureté de l'azote est définie de la manière suivante :

$$\frac{n_{N_2}^S\left(Adsorption\right)+n_{N_2}^S\left(Depressurization\right)+n_{N_2}^S\left(Rinse\right)}{n_{Total}^S\left(Adsorption\right)+n_{Total}^S\left(Depressurization\right)+n_{Total}^S\left(Rinse\right)}$$

dans laquelle :

$n_{N_2}^S\left(Adsorption\right)$ représente le nombre de moles d'azote sortant dans la phase gaz pendant l'étape d'adsorption,

$n_{N_2}^S\left(Depressurization\right)$ représente le nombre de moles d'azote sortant dans la phase gaz pendant l'étape de dépressurisation,

$n_{N_2}^S\left(Rinse\right)$ représente le nombre de moles d'azote sortant dans la phase gaz pendant l'étape de rinçage,

$n_{Total}^S\left(Adsorption\right)$ représente le nombre total de moles sortant dans la phase gaz pendant l'étape d'adsorption,

$n_{Total}^S\left(Depressurization\right)$ représente le nombre total de moles sortant dans la phase gaz pendant l'étape de dépressurisation,

$n_{Total}^S\left(Rinse\right)$ représente le nombre total de moles sortant dans la phase gaz pendant l'étape de rinçage,

La pureté du propylène est définie de la manière suivante :

$$\frac{n_{C_3H_6}^S\left(Blowdown\right)+n_{C_3H_6}^S\left(Purge\right)}{n_{Total}^S\left(Blowdown\right)+n_{Total}^S\left(Purge\right)}$$

dans laquelle :

$n_{C_3H_6}^S\left(Blowdown\right)$ représente le nombre de moles de propylène sortant dans la phase gaz pendant l'étape de dépressurisation à contre-courant,

$n_{C_3H_6}^S\left(Purge\right)$ représente le nombre de moles de propylène sortant dans la phase gaz pendant l'étape de purge,

$n_{Total}^S\left(Blowdown\right)$ représente le nombre total de moles sortant dans la phase gaz pendant l'étape de dépressurisation à contre-courant,

$n_{Total}^S\left(Purge\right)$ représente le nombre total de moles sortant dans la phase gaz pendant l'étape de purge.

Le taux de récupération de l'azote est défini de la manière suivante :

$$\frac{n_{N_2}^S\left(Adsorption\right)+n_{N_2}^S\left(Depressurization\right)+n_{N_2}^S\left(Rinse\right)-n_{N_2}^E\left(Purge\right)-n_{N_2}^E\left(Pressurization\right)}{n_{N_2}^E\left(Adsorption\right)}$$

dans laquelle :

$n_{N_2}^S\left(Adsorption\right)$ représente le nombre de moles d'azote sortant dans la phase gaz pendant l'étape d'adsorption,

$n_{N_2}^S\left(Depressurization\right)$ représente le nombre de moles d'azote sortant dans la phase gaz pendant l'étape de dépressurisation,

$n_{N_2}^S\left(Rinse\right)$ représente le nombre de moles d'azote sortant dans la phase gaz pendant l'étape de rinçage,

$n_{N_2}^E\left(Purge\right)$ représente le nombre de moles d'azote entrant dans la colonne pendant l'étape de purge,

$n_{N_2}^E\left(Pressurization\right)$ représente le nombre de moles d'azote entrant dans la colonne pendant l'étape de repressurization,

$n_{N_2}^E\left(Adsorption\right)$ représente le nombre de moles d'azote entrant avec la charge pendant l'étape d'adsorption.

Le taux de récupération de l'azote est défini de la manière suivante :

$$\frac{n^S_{C_3H_6}\left(Blowdown\right) + n^S_{C_3H_6}\left(Purge\right) - n^E_{C_3H_6}\left(Rinse\right)}{n^E_{C_3H_6}\left(Adsorption\right)}$$

dans laquelle :

$n^S_{C_3H_6}\left(Blowdown\right)$ représente le nombre de moles de propylène sortant dans la phase gaz pendant l'étape de dépressurisation à contre-courant,

$n^S_{C_3H_6}\left(Purge\right)$ représente le nombre de moles de propylène sortant dans la phase gaz pendant l'étape de purge,

$n^E_{C_3H_6}\left(Rinse\right)$ représente le nombre de moles de propylène entrant avec la charge pendant l'étape de rinçage,

$n^E_{C_3H_6}\left(Adsorption\right)$ représente le nombre de moles de propylène entrant avec la charge pendant l'étape d'adsorption.

Les résultats de simulation sont indiqués dans le tableau 5 suivant :

Tableau 5

| Durée des étapes (s) | | | | | |
|---|---|---|---|---|---|
| Adsorption | Dépressurisation à co-courant | Rinçage | Dépressurisation à contre-courant (« Blowdown ») | Purge | Repressurisation |
| 800 | 100 | 600 | 250 | 600 | 50 |
| P (bar abs.) | P (bar abs.) | P (bar abs.) | | T alimentation (°C) | |
| 2,5 | 1,0 | 0,1 | | 70 | |
| Débit d'adsorption (SLPM) | | Débit de rinçage (SLPM) | | Débit de purge (SLPM) | |
| 4,0 | | 1,3 | | 0,17 | |
| Azote récupéré | | | Propylène récupéré | | |
| Pureté (%) | Taux de récupération (%) | Productivité ($mol_{N2}/kg_{ads}/h$) | Pureté (%) | Taux de récupération (%) | Productivité ($mol_{N2}/kg_{ads}/h$) |
| 99,9 | 97,4 | 4,33 | 97,9 | 87,6 | 1,67 |
| Consommation énergétique | | | | | |
| 36.6 W (5.0 $Wh/mol_{N2}$, 13.0 $Wh/mol_{C3H6}$) | | | | | |

## 2) Exemple 2 : Expérience à l'échelle pilote

La capacité d'adsorption en dynamique (capacité dynamique) du MIL-100 (Fe) vis-à-vis du propylène a été déterminée à 50°C et 70°C.

Par ailleurs, des cycles d'adsorption/désorption en mode VPSA (« Vacuum Pressure Swing Adsorption ») ont été réalisés afin de confirmer expérimentalement les résultats de simulation décrits ci-dessus.

## 2.1 Description du pilote

Le pilote est composé de stockages d'azote et de propylène liquide, d'un régulateur permettant de réguler le débit d'azote, d'une pompe volumétrique destinée au propylène liquide, et d'un évaporateur situé sur le mélange, en amont de la colonne d'adsorption. Le lit d'adsorbant (MIL-100(Fe) tel que décrit ci-dessous) est placé dans la colonne d'adsorption de diamètre intérieur 1" et d'une hauteur de 2m. Cette colonne est munie d'une double enveloppe extérieure dans laquelle circule un fluide caloporteur thermo-régulé capable de fonctionner entre 20 et 200 °C. Trois thermocouples sont placés en bas, au milieu et en haut de la colonne, à 0,1 m, 1 m et 1,80 m à partir du bas du lit d'adsorbant, au centre de la colonne.

Une régulation de pression en sortie de colonne permet de maitriser la pression dans la colonne. Une pompe à vide est également reliée à la colonne de façon à pouvoir travailler sous vide lors de la régénération de l'adsorbant. Un analyseur infrarouge en ligne permet d'analyser les flux en entrée et sur les sorties de la colonne. Des débits mètres sont également présents en entrée et en sortie de la colonne d'adsorption.

Au cours de l'étape d'adsorption, le propylène liquide est pompé à l'aide de la pompe volumétrique et mélangé avec l'azote. Le mélange gaz/liquide est alors complètement vaporisé avant d'entrer dans la colonne d'adsorption de façon ascendante. Le flux est contrôlé à l'aide d'un régulateur situé sur la pompe et d'un système de régulation de débit et la pression est contrôlée à l'aide d'une boucle de régulation de pression située après la colonne d'adsorption.

L'étape de désorption est réalisée en diminuant la pression par entraînement sous vide en introduisant une petite quantité d'azote dans la colonne.

Le MIL-100(Fe) testé se présente sous forme de billes de 2,5 mm de diamètre, avec une surface spécifique mesurée selon la méthode BET supérieure à 2100 m$^2$/g.

Le MIL-100(Fe) nécessite d'être activé avant utilisation : 3 heures à 150 °C sous vide d'azote. A l'issue de l'activation, la perte de poids est d'environ 13% par rapport au poids initial. Après chaque test, le MIL-100(Fe) a été réactivé dans ces conditions à l'aide d'un faible flux d'azote sous vide (moins de 3 mbars).

2.2. Conditions opératoires

    Température : 20-200°C
    Pression : 0-80 bars

Tableau 6

| Pression | Minimale | Intervalle normal | Maximale |
|---|---|---|---|
| Adsorption | 1 bar abs. | 1-20 bars abs. | 80 bars abs. |
| Désorption | 0,02 bar abs. | 0,1 bar abs. | 5 bars abs. |

2.3. Echantillonnage et analyse

L'analyse des différents flux gazeux est réalisée en ligne à l'aide de soupapes à trois voies. Ces soupapes permettent l'analyse du mélange à l'entrée de la colonne, du mélange en sortie de colonne ou du mélange qui passe à travers la pompe à vide. L'analyse est réalisée à l'aide d'un analyseur avec source infrarouge à base de platine (ABB).

2.4. Résultats

2.4.1 Détermination de la capacité dynamique du MIL-100 (Fe) vis-à-vis du propylène à 50°C et 70°C

Les courbes de perçage et les profils de température sur le MIL-100 (Fe) pour le propylène (débit d'alimentation : 80N1/h $\pm$ 5%) à 50 °C et 1,25 bar abs. ont été déterminées. Les conditions opératoires et la quantité de propylène adsorbé à l'équilibre sont indiquées dans le tableau 7. La capacité dynamique du MIL-100 (Fe) vis-à-vis du propylène à 50°C et 1,25 bar abs. est de 4,290 mol/kg.

Les courbes de perçage et les profils de température sur le MIL-100 (Fe) pour le propylène (débit d'alimentation : 80N1/h $\pm$ 5%) à 70 °C et 1,28 bars abs. et 2,4 bars abs. ont été déterminées. Les conditions opératoires et la quantité de propylène adsorbé sont indiquées dans le tableau 8. La capacité dynamique d'adsorption du MIL-100 (Fe) vis-à-vis du propylène à 70°C/1,28 bars abs. et 70°C/2,40 bars abs. est respectivement de 3,862 mol/kg et 5,387 mol/kg.

Tableau 7

| Température | 50 °C |
|---|---|
| Pression d'adsorption (bar abs.) | 1,25 |
| Température d'adsorption (K) | 323 |

(suite)

| Flux volumique moyen à l'entrée de la colonne (NL.hr) | 80 | | | |
|---|---|---|---|---|
| Propylène dans la charge d'alimentation (%) | 100 | | | |
| Flux molaire à l'entrée de la colonne (mol.s) | $9,92 \times 10^{-4}$ | | | |
| Masse d'adsorbant dans le lit (kg) | 0,331 | | | |
| Volume du lit d'adsorbant (m³) | $1,067 \times 10^{-3}$ | | | |
| Densité réelle de l'adsorbant (kg/m³) | 888 | | | |
| Porosité du lit ($\varepsilon$) | 0,65 | | | |
| Diamètre (m) | 0,02606 | | | |
| Hauteur du lit (m) | 2 | | | |
| Position des capteurs | T | En bas | Au milieu | En haut |
| | h (m) | 0,10 | 1,00 | 1,80 |
| Adsorbé à l'équilibre | Quantité de propylène (mol) | 1,418 | | |
| | Capacité dynamique (mol/kg) | 4,290 | | |

Tableau 8

| Température | 70 °C | | | |
|---|---|---|---|---|
| Pression d'adsorption 1 (bar abs.) | 1,28 | | | |
| Pression d'adsorption 2 (bar abs.) | 2,40 | | | |
| Température d'adsorption (K) | 343 | | | |
| Flux volumique moyen à l'entrée de la colonne (NL.hr) | 81,3 | | | |
| Propylène dans la charge d'alimentation (%) | 100 | | | |
| Flux molaire à l'entrée de la colonne (mol.s) | $1,01 \times 10^{-3}$ | | | |
| Masse d'adsorbant dans le lit (kg) | 0,331 | | | |
| Volume du lit d'adsorbant (m³) | $1,067 \times 10^{-3}$ | | | |
| Densité réelle de l'adsorbant (kg.m³) | 888 | | | |
| Porosité du lit ($\varepsilon$) | 0,65 | | | |
| Diamètre (m) | 0,02606 | | | |
| Hauteur du lit (m) | 2 | | | |
| Position des capteurs | T | En bas | Au milieu | En haut |
| | h (m) | 0,10 | 1,00 | 1,80 |
| Equilibre 1 | Quantité de propylène adsorbé (mol) | 1,276 | | |
| | Capacité dynamique (mol/kg) | 3,862 | | |
| Equilibre 2 | Quantité de propylène adsorbé (mol) | 0,504 | | |
| | Capacité dynamique (mol/kg) | 5,387 | | |

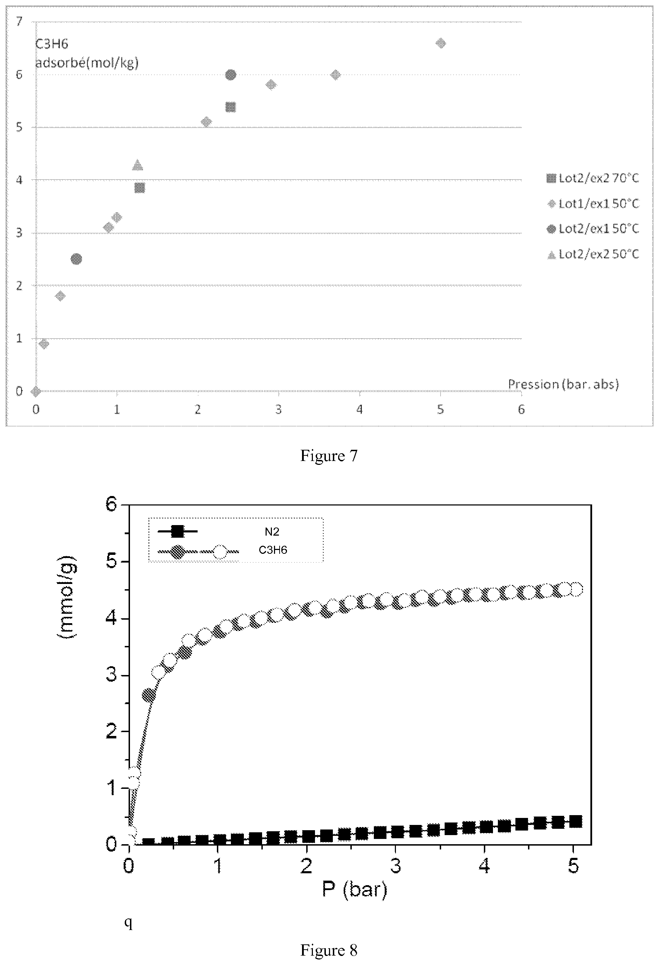

La figure 7 représente la capacité d'adsorption du MIL-100 (Fe) (« C3H6 (mol/kg) ») en fonction de la pression (Pressure (bar abs.) à 50 °C ou à 70°C, soit sous forme de cylindres (lot 1), soit sous forme de billes (lot 2), dans les conditions de l'exemple 1 (simulation) ou bien dans les conditions de l'exemple 2 (pilote).

On peut voir sur la figure 7 que la capacité d'adsorption du MIL-100 (Fe) par rapport au propylène en dynamique (ex 2) est très proche de celle déterminée dans les conditions statiques (ex 1). Les résultats sont homogènes.

Ces résultats sur pilote valident les résultats obtenus par simulation et montrent que des solides hybrides poreux, tels que le MIL-100 (Fe), présentent une capacité dynamique d'adsorption vis-à-vis des hydrocarbures, notamment du propylène, qui est suffisamment élevée (au moins supérieure à 3 mmole/g) pour permettre une séparation efficace de l'azote dans des gammes de pression appropriées pour une application industrielle.

2.4.2 Cycles en VPSA (« Vacuum Pressure Swing Adsorption »)

Des cycles d'adsorption/désorption en mode VPSA (« Vacuum Pressure Swing Adsorption ») ont été réalisés afin de confirmer expérimentalement les résultats de simulation de l'exemple 1.

Etapes:

- adsorption (2,5 bars abs.)
- dépressurisation à co-courant (1,5 bars abs.)
- dépressurisation à contre-courant (« Blowdown ») (0,5 bars abs.)
- purge à contre-courant à l'aide d'azote pur à 100%,
- repressurisation à l'aide d'azote pur à 100%.
- L'azote est récupéré à l'issue des étapes d'adsorption et de dépressurisation à co-courant.

Conditions opératoires :

- pression d'adsorption : 2,5 bars abs.
- température d'adsorption : 70°C
- pression de désorption : 0,5 bar abs.

Composition de la charge à l'entrée du lit : 70 % molaire de propylène
30 % molaire azote

Quantité de MIL-100 (Fe) activé (billes) : 330 g

Les résultats sur pilote en comparaison avec ceux obtenus par simulation sont indiqués dans le Tableau 9 :

Tableau 9

|  | Unité | Simulation | Pilote |
|---|---|---|---|
| Temps d'adsorption | s | 1180 | 1180 |
| Longueur du lit | m | 1,99 | 1,99 |
| Diamètre du lit | m | 0,026 | 0,026 |
| Débit de la charge | mol/h | 2,68 | 2,68 |
| Débit de la purge | SLPM | 0,13 | 0,13 |
| Adsorbant |  | MIL-100 (Fe) cylindres | MIL-100 (Fe) billes |
| Diamètre de l'adsorbant | M | 0,0015 | 0,0025 |
| Masse de l'adsorbant | kg | 0,560 | 0,330 |
| Densité de l'adsorbant | kg/m$^3$ | 888 | 888 |
| Porosité du lit |  | 0,41 | 0,65 |

La pureté de l'azote est définie selon la formule suivante :

$$\frac{n_{N2}^s(Adsorption) + n_{N2}^s(depressurization)}{n_{Total}^s(Adsorption) + n_{Total}^s(depressurization)}$$

dans laquelle

$n^s_{N2}(Adsorption)$ représente le nombre de moles d'azote sortant dans la phase gaz pendant l'étape d'adsorption

$n^s_{N2}(depressurization)$ représente le nombre de moles d'azote sortant dans la phase gaz pendant l'étape de dépressurisation

$n^s_{Total}(Adsorption)$ représente le nombre total de moles sortant dans la phase gaz pendant l'étape d'adsorption

$n^s_{Total}(depressurization)$ représente le nombre total de moles sortant dans la phase gaz pendant l'étape de dépressurisation.

Le taux de récupération de l'azote est défini selon la formule suivante :

$$\frac{n^s_{N2}(Ads) + n^s_{N2}(depressurization)}{n^e_{N2}(Recomp) + n^e_{N2}(Ads) + n^e_{N2}(purge)}$$

dans laquelle :

$n^s_{N2}(Ads)$ représente le nombre de moles d'azote sortant dans la phase gaz pendant l'étape de d'adsorption

$n^s_{N2}(depressurization)$ représente le nombre de moles d'azote sortant dans la phase gaz pendant l'étape de dépressurisation

$n^e_{N2}(Recomp)$ représente le nombre de moles d'azote entrant dans la colonne pendant l'étape de recompression

$n^e_{N2}(Ads)$ représente le nombre de moles d'azote entrant avec la charge pendant l'étape d'adsorption

$n^e_{N2}(purge)$ représente le nombre de moles d'azote entrant dans la colonne pendant l'étape de purge.

Ces valeurs sont déterminées sur un cycle complet après stabilisation du procédé.

La pureté en azote récupéré est de 97,6 % mol.

Le taux de récupération de l'azote est de 63,4 %.

Ces résultats montrent que des solides hybrides poreux, tels que le MIL-100 (Fe), présentent une capacité dynamique d'adsorption vis-à-vis des hydrocarbures, notamment du propylène, qui est élevée (au moins supérieure à 3 mmole/g) dans des gammes de pression appropriées pour une application industrielle.

Par ailleurs, ces résultats montrent que les solides hybrides poreux, tels que le MIL-100 (Fe), peuvent être utilisés pour séparer de manière très performante l'azote des hydrocarbures, c'est-à-dire avec des niveaux très élevés en pureté (> 95%) et des taux de récupération supérieurs à 80% si effectue en outre une étape de dépressurisation à co-courant après l'étape d'adsorption et une purge à contre-courant à l'aide de l'azote de haute pureté tel que décrit dans l'exemple 1.

3) Exemple 3 : Mesures d'équilibre sur MIL-125(Ti) NH2 ou UiO-66(Zr)

La Figure 8 représente la comparaison entre les isothermes d'adsorption de l'azote et les isothermes d'adsorption (points noirs) et de désorption (points blancs) du propylène à 70 °C sur le MIL-125(Ti)_NH2 dont les caractéristiques sont indiquées dans le tableau 10 suivant.

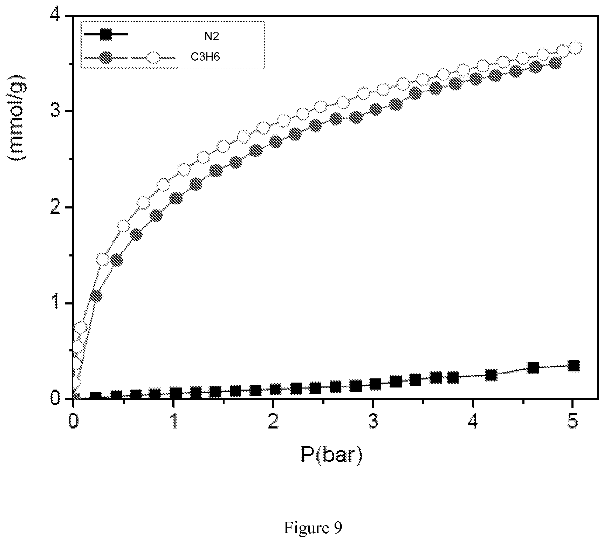

La Figure 9 représente la comparaison entre les isothermes d'adsorption de l'azote et les isothermes d'adsorption (points noirs) et de désorption (points blancs) du propylène à 70 °C sur le UiO-66(Zr).

Tableau 10

|  | MIL-125(Ti)_NH2 | UiO-66(Zr) |
|---|---|---|
| Forme de l'adsorbant | Poudre | Poudre |
| Porosité | 0,59 cc/g | 0,8 cc/g |
| Surface spécifique BET | 1450 $m^2$/g | 1350 $m^2$/g |

Les isothermes de sorption ont été mesurés à l'aide d'un appareil de type IGA (Intelligant Gravimetric Analyzer, Hiden Analytical Ltd.), avec contrôle de la pression du gaz (0-5bar) à 70°C. Avant de réaliser les mesures d'adsorption, les échantillons d'adsorbant (30 mg) ont été déshydratés à 200 °C pendant 12 heures sous vide (< $10^{-5}$ torr).

Il ressort de ces isothermes que la sélectivité propylène/azote à 1 bar abs. et 70 °C sur le MIL-125(Ti)_NH2 est de 47,2.

Il ressort de ces isothermes que la sélectivité propylène/azote à 1 bar abs. et 70 °C sur la UiO-66(Zr) est de 33,4.

## Revendications

1. Procédé cyclique de production d'une fraction d'azote de pureté $\geq$ 95 % molaire (2) d'une part et d'une fraction enrichie en hydrocarbure (3) d'autre part à partir d'une charge (1) contenant de l'azote et un hydrocarbure, l'hydrocarbure étant du propylène, chaque cycle comprenant les étapes suivantes :

   i) mise en contact de ladite charge (1) avec un lit d'adsorbant pourvu d'une extrémité d'alimentation et d'une extrémité de production et contenant un adsorbant solide qui est un solide hybride poreux , ladite mise en contact étant réalisée sous une pression $P_1 \geq 0,1$ MPa et une température $T_1 \geq 0$ °C;
   ii) récupération à l'extrémité de production du lit d'adsorbant d'une première fraction d'azote de pureté $\geq$ 95 % molaire (2);
   iii) dépressurisation à co-courant du lit d'adsorbant jusqu'à une pression $P_2 < P_1$, où $P_2 \geq 0,1$ MPa, de manière à récupérer à l'extrémité de production du lit d'adsorbant une deuxième fraction d'azote de pureté $\geq$ 95 % molaire (2);
   iv) dépressurisation à contre-courant du lit d'adsorbant jusqu'à une pression $P_3 < P_2$, où 0,05 MPa $\leq P_3 \leq$ 0,006 MPa, de manière à désorber les hydrocarbures du lit et à récupérer à l'extrémité d'alimentation du lit d'adsorbant une première fraction enrichie en hydrocarbure (3);
   v) purge à contre-courant du lit d'adsorbant à l'aide d'une portion de l'azote de pureté $\geq$ 95% molaire (2) sous la pression $P_3$ de manière à récupérer à l'extrémité d'alimentation du lit d'adsorbant une deuxième fraction enrichie en hydrocarbure (3);
   vi) repressurisation à contre-courant du lit d'adsorbant à l'aide de l'azote de pureté $\geq$ 95 % molaire (2) ou avec la charge (1) jusqu'à la pression $P_1$ ;

   dans lequel ledit adsorbant a une capacité dynamique vis-à-vis de l'hydrocarbure d'au moins 3 mmole/g entre 0,25 MPa et 0,05 MPa à 50 °C et une capacité dynamique vis-à-vis de l'azote inférieure ou égale à 0,50 mmole/g entre 0,25 MPa et 0,05 MPa à 50 °C,
   **caractérisé en ce que**, avant d'effectuer l'étape iv) de dépressurisation, une partie de la première fraction enrichie en hydrocarbure (3) est recyclée dans le lit d'adsorbant par l'extrémité d'alimentation de manière à saturer le lit en hydrocarbure et à récupérer à l'issue de l'étape iv) une fraction enrichie en hydrocarbure (2) avec une pureté $\geq$ 90 % molaire.

2. Procédé selon la revendication 1, **caractérisé en ce que** l'étape i) de mise en contact de la charge (1) avec le lit d'adsorbant est réalisée à une pression $P_1$ comprise entre 0,1 MPa et 1 MPa, de préférence comprise entre 0,2 MPa et 0,5 MPa, plus préférentiellement à 0,25 MPa et à une température comprise entre 0 °C et 100 °C, de préférence à 50 °C.

3. Procédé selon la revendication 1 ou 2, **caractérisé en ce que** l'étape de dépressurisation à co-courant iii) est réalisée à une pression $P_2$ comprise entre 0,2 MPa et 0,1 MPa, de préférence entre 0,15 et 0,1 MPa, plus préférentiellement à 0,1 MPa.

4. Procédé selon l'une quelconque des revendications 1 à 3, **caractérisé en ce que** l'étape de dépressurisation iv) est réalisée sous vide.

5. Procédé selon l'une quelconque des revendications 1 à 4, **caractérisé en ce que** l'étape de dépressurisation iv) est réalisée à une pression $P_3$ comprise entre 0,05 MPa et 0,01 MPa, de préférence entre 0,05 MPa et 0,025 MPa, plus préférentiellement à à 0,04 MPa.

6. Procédé selon la revendication 1, **caractérisé en ce que** l'étape de dépressurisation iv) est réalisée sous une pression $P_3$ comprise entre 0,05 MPa et 0,006 MPa, de préférence entre 0,03 MPa et 0,006 MPa, plus préférentiellement entre 0,02 MPa et 0,006 MPa, encore plus préférentiellement à 0,01 MPa.

7. Procédé selon l'une quelconque des revendications 1 à 6, **caractérisé en ce que** le taux de récupération d'azote de pureté ≥ 95 % molaire est supérieur ou égal à 80 %, de préférence supérieur au égal à 95 %.

8. Procédé selon les revendications 1 ou 6, **caractérisé en ce que** le taux de récupération d'hydrocarbure de pureté ≥ 90 % molaire est supérieur ou égal à 80 %, de préférence supérieur ou égal à 90 %.

9. Procédé selon l'une quelconque des revendications 1 à 8, **caractérisé en ce que** la charge (1) contient au moins 30 % molaire d'azote et au plus 70 % molaire d'hydrocarbure, de préférence au moins 70 % molaire d'azote et au plus 30 % molaire d'hydrocarbure.

10. Procédé selon l'une quelconque des revendications 1 à 9, **caractérisé en ce que** la charge (1) provient d'une installation de production de polypropylène.

11. Procédé de production de polypropylène par polymérisation de propylène comprenant éventuellement une fraction en propane, dans lequel le polypropylène issu de l'étape de polymérisation est séparé du propylène et du propane n'ayant pas réagi au cours de la polymérisation à l'aide d'un séparateur gaz/solide dans lequel on introduit une charge d'azote pour purifier le polypropylène, ce qui conduit à la formation d'un mélange azote/propylène/propane, ledit procédé étant **caractérisé en ce qu'**on récupère ledit mélange azote/propylène/propane et on effectue les étapes telles que définies dans l'une quelconque des revendications 1 à 10 afin de produire d'une part une fraction d'azote de pureté ≥ 95 % molaire et d'autre part une fraction enrichie en propylène et propane.

**Patentansprüche**

1. Zyklisches Produktionsverfahren für einen Stickstoffanteil mit einer Reinheit ≥ 95 mol% (2) einerseits und einen mit Kohlenwasserstoff angereicherten Anteil (3) andererseits, basierend auf einer Ladung (1), welche Stickstoff und einen Kohlenwasserstoff umfasst, wobei der Kohlenwasserstoff Propylen ist, wobei jeder Zyklus die folgenden Schritte umfasst:

   i) Inkontaktbringen der Ladung (1) mit einem Adsorberbett, welches ein Zuführende und ein Produktionsende aufweist und einen festen Adsorber aufweist, der ein poröser Hybridfeststoff ist, wobei das Inkontaktbringen bei einem Druck $P_1 \geq 0,1$ MPa und einer Temperatur $T_1 \geq 0$ °C erfolgt;
   ii) am Produktionsende des Adsorberbettes Wiedergewinnung eines ersten Stickstoffanteils mit einer Reinheit ≥ 95 mol% (2);
   iii) Gleichstrom-Druckabbau des Adsorberbettes bis zu einem Druck $P_2 < P_1$, wobei $P_2 \geq 0,1$ MPa zur Wiedergewinnung eines zweiten Stickstoffanteils mit einer Reinheit ≥ 95 mol% (2) am Produktionsende des Adsorberbettes;
   iv) Gegenstrom-Druckabbau des Adsorberbettes bis zu einem Druck $P_3 < P_2$, wobei 0,05 MPa ≤ $P_3$ ≤ 95 0,006 MPa, um die Kohlenwasserstoffe aus dem Bett zu adsorbieren und am Zuführende des Adsorberbettes einen ersten mit Kohlenwasserstoff (3) angereicherten Anteil wiederzugewinnen;
   v) Gegenstrom-Reinigung des Adsorberbettes mittels eines Stickstoffanteils mit einer Reinheit ≥ 95 mol% (2) bei dem Druck $P_3$, um am Zuführende des Adsorberbettes einen zweiten mit Kohlenwasserstoff (3) angereicherten Anteil wiederzugewinnen;
   vi) Gegenstrom-Druckaufbau des Adsorberbettes mittels eines Stickstoffs mit einer Reinheit ≥ 95 mol% (2) oder mit der Ladung (1) bis zum Druck $P_1$;

   wobei der Adsorber gegenüber Kohlenwasserstoff mit wenigstens 3 mmol/g bei 50 °C eine dynamische Kapazität von 0,25 - 0,05 MPa und gegenüber Stickstoff kleiner gleich 0,50 mmol/g bei 50 °C eine dynamische Kapazität von 0,25 - 0,05 MPa aufweist,
   **dadurch gekennzeichnet, dass** vor der Ausführung des Schrittes iv) des Druckabbaus ein Teil des ersten mit Kohlenwasserstoff angereicherten Anteils (3) in dem Adsorberbett durch das Zuführende recycelt wird, sodass das Adsorberbett mit Kohlenwasserstoff gesättigt wird, und um am Ende von Schritt iv) einen mit Kohlenwasserstoff angereicherten Anteil (2) mit einer Reinheit ≥ 90 mol% zu gewinnen.

2. Verfahren nach Anspruch 1, **dadurch gekennzeichnet, dass** der Schritt i) des Inkontaktbringens der Ladung (1) mit dem Adsorberbett bei einem Druck $P_1$ von 0,1-1 MPa, bevorzugt 0,2 -0,5 MPa, stärker bevorzugt von 0,25 MPa und bei einer Temperatur von 0-100 °C, bevorzugt von 50 °C durchgeführt wird.

3. Verfahren nach Anspruch 1 oder 2, **dadurch gekennzeichnet, dass** der Schritt des Gegenstrom-Druckabbaus iii) bei einem Druck $P_2$ von 0,2-0,1 MPa, bevorzugt 0,15 -0,1 MPa, stärker bevorzugt von 0,1 MPa durchgeführt wird.

4. Verfahren nach einem der Ansprüche 1 bis 3, **dadurch gekennzeichnet, dass** der Schritt des Druckabbaus iv) in einem Vakuum durchgeführt wird.

5. Verfahren nach einem der Ansprüche 1 bis 4, **dadurch gekennzeichnet, dass** der Schritt des Druckabbaus iv) bei einem Druck $P_3$ von 0,05-0,01 MPa, bevorzugt 0,05-0,025 MPa, stärker bevorzugt von 0,04 MPa durchgeführt wird.

6. Verfahren nach Anspruch 1, **dadurch gekennzeichnet, dass** der Schritt des Druckabbaus iv) bei einem Druck $P_3$ von 0,05-0,006 MPa, bevorzugt 0,03-0,006 MPa, stärker bevorzugt von 0,02-0,006 MPa, noch stärker bevorzugt von 0,01 MPa durchgeführt wird.

7. Verfahren nach einem der Ansprüche 1 bis 6, **dadurch gekennzeichnet, dass** die Rückgewinnungsrate von Stickstoff mit einer Reinheit $\geq$ 95 mol% größer gleich 80 %, bevorzugt größer gleich 95 % ist.

8. Verfahren nach Anspruch 1 oder 6, **dadurch gekennzeichnet, dass** die Rückgewinnungsrate von Kohlenwasserstoff mit einer Reinheit $\geq$ 90 mol% größer gleich 80 %, bevorzugt größer gleich 90 % ist.

9. Verfahren nach einem der Ansprüche 1 bis 8, **dadurch gekennzeichnet, dass** die Ladung (1) wenigstens 30 mol% Stickstoff und höchstens 70 mol% Kohlenwasserstoff enthält, bevorzugt wenigstens 70 mol% Stickstoff und höchstens 30 mol% Kohlenwasserstoff.

10. Verfahren nach einem der Ansprüche 1 bis 9, **dadurch gekennzeichnet, dass** die Ladung (1) von einer Anlage zur Herstellung von Polypropylen stammt.

11. Verfahren zur Herstellung von Polypropylen durch Polymerisation von Propylen, welches gegebenenfalls einen Propananteil enthält, wobei das aus dem Schritt der Polymerisation hervorgegangene Polypropylen von dem Polypropylen und dem Propan, welches während der Polymerisation nicht reagiert hat, mittels eines Trennmittels Gas/Feststoff getrennt wird, in welches zur Reinigung des Polypropylens eine Stickstoffladung eingeführt wird, was zur Bildung einer Stickstoff/Polypropylen/Propan-Mischung führt, wobei das Verfahren **dadurch gekennzeichnet ist, dass** die Stickstoff/Polypropylen/Propan-Mischung wiedergewonnen wird und die Schritte nach einem der Ansprüche 1 bis 10 durchgeführt werden, um einerseits einen Stickstoffanteil mit einer Reinheit $\geq$ 95 mol% und andererseits einen mit Propylen und Propan angereicherten Anteil herzustellen.

**Claims**

1. A cyclical process for the production of a nitrogen fraction with a purity $\geq$ 95 mol% (2), on the one hand, and of a fraction enriched in hydrocarbon (3), on the other hand, from a feedstock (1) comprising nitrogen and a hydrocarbon, the hydrocarbon being propylene, each cycle comprising the following stages:

   i) bringing said feedstock (1) into contact with an adsorbent bed provided with a feed end and with a production end and containing a solid adsorbent chosen from porous hybrid solids, said contacting operation being carried out under a pressure $P_1 \geq 0.1$ MPa and a temperature $T_1 \geq 0°C$;
   ii) recovering, at the production end of the adsorbent bed, a first nitrogen fraction with a purity $\geq$ 95 mol% (2);
   iii) depressurizing the adsorbent bed cocurrentwise down to a pressure $P_2 < P_1$ where $P_2 \geq 0.1$ MPa, so as to recover, at the production end of the adsorbent bed, a second fraction of nitrogen with a purity $\geq$ 95 mol% (2);
   iv) depressurizing the adsorbent bed countercurrentwise down to a pressure $P_3 < P_2$ where $0.05$ MPa $\leq P_3 \leq 0.006$ MPa, so as to desorb the hydrocarbons from the bed and to recover, at the feed end of the adsorbent bed, a first fraction enriched in hydrocarbon (3);
   v) purging the adsorbent bed countercurrentwise using a nitrogen fraction with a purity $\geq$ 95 mol% (2) under the pressure $P_3$, so as to recover, at the feed end of the adsorbent bed, a second fraction enriched in hydrocarbon (3);
   vi) repressurizing the adsorbent bed countercurrentwise using the nitrogen with a purity $\geq$ 95 mol% (2) or with the feedstock (1) up to the pressure $P_1$;

   in which said adsorbent has a dynamic capacity with regard to the hydrocarbon of at least 3 mmol/g between 0.25 MPa and 0.05 MPa at 50°C and a dynamic capacity with regard to the nitrogen of less than or equal to 0.50 mmol/g between 0.25 MPa and 0.05 MPa at 50°C,
**characterized in that**, before carrying out the depressurization stage iv), a portion of the first fraction enriched in hydrocarbon (3) is recycled in the adsorbent bed via the feed end, so as to saturate the bed with hydrocarbon and to recover, on conclusion of stage iv), a fraction enriched in hydrocarbon (2) with a purity ≥ 90 mol%..

2. The process as claimed in claim 1, **characterized in that** stage i) of bringing the feedstock (1) into contact with the adsorbent bed is carried out at a pressure $P_1$ of between 0.1 MPa and 1 MPa, preferably of between 0.2 MPa and 0.5 MPa and more preferably at 0.25 MPa and at a temperature of between 0°C and 100°C and preferably at 50°C.

3. The process as claimed in claim 1 or 2, **characterized in that** the cocurrentwise depressurization stage iii) is carried out at a pressure $P_2$ of between 0.2 MPa and 0.1 MPa, preferably between 0.15 MPa and 0.1 MPa and more preferably at 0.1 MPa.

4. The process as claimed in any one of claims 1 to 3, **characterized in that** the depressurization stage iv) is carried out under vacuum.

5. The process as claimed in any one of claims 1 to 4, **characterized in that** the depressurization stage iv) is carried out at a pressure $P_3$ of between 0.05 MPa and 0.01 MPa, preferably between 0.05 MPa and 0.025 MPa and more preferably at 0.04 MPa.

6. The process as claimed in claim 1, **characterized in that** the depressurization stage iv) is carried out under a pressure $P_3$ of between 0.05 MPa and 0.006 MPa, preferably between 0.03 MPa and 0.006 MPa, more preferably between 0.02 MPa and 0.006 MPa and more preferably still at 0.01 MPa.

7. The process as claimed in any one of claims 1 to 6, **characterized in that** the degree of recovery of nitrogen with a purity ≥ 95 mol% is greater than or equal to 80%, preferably greater than or equal to 95%.

8. The process as claimed in claim 1 or 6, **characterized in that** the degree of recovery of hydrocarbon with a purity ≥ 90 mol% is greater than or equal to 80%, preferably greater than or equal to 90%.

9. The process as claimed in any one of claims 1 to 8, **characterized in that** the feedstock (1) comprises at least 30 mol% of nitrogen and at most 70 mol% of hydrocarbon, preferably at least 70 mol% of nitrogen and at most 30 mol% of hydrocarbon.

10. The process as claimed in any one of claims 1 to 9, **characterized in that** the feedstock (1) originates from a plant for the production of polypropylene.

11. A process for the production of polypropylene by polymerization of propylene optionally comprising a propane fraction, in which the polypropylene resulting from the polymerization stage is separated from the propylene and propane which have not reacted during the polymerization using a gas/solid separator into which a nitrogen charge is introduced in order to purify the polypropylene, which results in the formation of a nitrogen/propylene/propane mixture, said process being **characterized in that** said nitrogen/propylene/propane mixture is recovered and the stages as defined in any one of claims 1 to 10 are carried out in order to produce, on the one hand, a nitrogen fraction with a purity ≥ 95 mol% and, on the other hand, a fraction enriched in propylene and propane.

Figure 1

Figure 2

Figure 3

Figure 4

N₂
product

Figure 5

| Adsorption | D | Rinse | B. | Purge | P |
|---|---|---|---|---|---|
| B | Purge | P | Adsorption | D | Rinse | B |
| D | Rinse | B | Purge | P | Adsorption | |

Figure 6

Figure 7

Figure 8

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1302478 A
- WO 2009007436 A